# EUROPEAN PATENT APPLICATION

(11) **EP 2 816 401 A1**
(43) Date of publication of application: **24.12.2014**
(21) Application number: 14172301.5
(22) Date of filing: 13.06.2014
(51) Int. Cl.: G02F 1/1341, G02F 1/1362, G02F 1/1333

(54) **Liquid crystal display and method for manufacturing the same**

(30) Priority: 17.06.2013 KR 20130069110
(71) Applicant: Samsung Display Co., Ltd., Gyeonggi-Do (KR)
(72) Inventor: Park, Jae Cheol, 944-102 Hwaseong-si Gyeonggi-do (KR); Song, Dae Ho, 831-2303 Hwaseong-si Gyeonggi-do (KR); Lee, Min-Woo, 101-502 Seoul (KR); Eoh, Gyeong Eun, 103-302 Seoul (KR); Oh, Min Jeong, Na-dong no. 407 Incheon (KR)
(74) Representative: Dr. Weitzel & Partner

(57) **Abstract**

In an aspect, a liquid crystal display is provided. The liquid crystal display may include a substrate (110), a thin film transistor disposed on the substrate, a pixel electrode (191) connected to one terminal of the thin film transistor, a roof layer (360) disposed to face the pixel electrode, and a capping layer (390) disposed on the roof layer, in which a microcavity (305) having a liquid crystal injection hole (307) is formed between the pixel electrode and the roof layer, the microcavity forms a liquid crystal layer including liquid crystal molecules, and the capping layer covers the liquid crystal injection hole and includes a water-soluble polymer material.

## Description

### BACKGROUND

### Field

This disclosure relates to a liquid crystal display and a method of manufacturing the same.

### Description of the Related Technology

A liquid crystal display is one of the most common types of flat panel displays currently in use, and includes two display panels formed of field generating electrodes such as a pixel electrode and a common electrode, and a liquid crystal layer interposed therebetween.

A liquid crystal display displays an image by applying a voltage to the field generating electrodes to generate an electric field on the liquid crystal layer, and thus to determine alignment of liquid crystal molecules of the liquid crystal layer, and control polarization of incident light.

A NCD (nanocrystal display) liquid crystal display is a device in which a display is obtained by forming a sacrificial layer using an organic material, forming a roof layer on an upper portion, removing the sacrificial layer, and filling liquid crystal in a microcavity formed by removing the sacrificial layer.

Herein, the liquid crystal may be injected through a liquid crystal injection hole of the microcavity, and after the liquid crystal is injected, capping may be performed by a coating material such as parylene in order to clog the liquid crystal injection hole.

However, known coating materials may have problems when covering the liquid crystal injection hole of coming into contact with the liquid crystal, which causes a contamination of the liquid crystal. Moreover, the coating material is applied on an entire surface of the panel and thus is cumbersome in that a tape is attached to an outskirt portion before the coating material is applied and the tape is detached after application in order to expose a pad portion of the outskirt portion of the panel.

The above information disclosed in this background section is only for enhancement of understanding of the background of the disclosure and therefore it may contain information that does not form the prior art that is already known in this country to a person of ordinary skill in the art.

### SUMMARY

Some embodiments provide a liquid crystal display including a capping layer for clogging a liquid crystal injection hole without contaminating the liquid crystal, and a method of manufacturing the same.

Some embodiments provide a liquid crystal display including a capping layer formed of a material that can be subjected to a photoprocess, and a method of manufacturing the same.

Some embodiments provide a liquid crystal display including: a substrate, a thin film transistor disposed on the substrate, a pixel electrode connected to one terminal of the thin film transistor, a roof layer disposed to face the pixel electrode, and a capping layer disposed on the roof layer, in which a microcavity having a liquid crystal injection hole is formed between the pixel electrode and the roof layer, wherein the microcavity forms a liquid crystal layer including a liquid crystal molecule, and the capping layer covers the liquid crystal injection hole and includes a water-soluble polymer material.

In some embodiments, the water-soluble polymer material may include at least one of polyvinyl alcohol (PVA), methoxypolyethylene glycol, polyethylene glycol, poly(ethylene glycol) diacrylate, polyethylene glycol dimethacrylate, and polyvinylpyrrolidone.

In some embodiments, the capping layer may further include a photoinitiator to have a property allowing a photoprocess.

In some embodiments, the photoinitiator may include at least one of ammonium dichromate, a diazo resin, a styrylpyridium group, and a stilbazolium group.

In some embodiments, the capping layer may further include an adherence accelerator.

In some embodiments, the adherence accelerator may include a material represented by the following Chemical Formula 3: 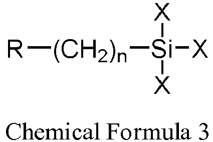 wherein, in Chemical Formula 3, **R** may include a methyl group, a vinyl group, acrylate group, methacrylate group, -NH₂ or an epoxy group, **X** may be -OCH₃ or - OCH₂CH₃, and **n** may be 1 to 30.

In some embodiments, the microcavity may include a plurality of regions corresponding to pixel regions, a liquid crystal injection hole forming region may be formed between the plurality of regions, and the capping layer may cover the liquid crystal injection hole forming region.

In some embodiments, the liquid crystal injection hole forming region may extend in a direction that is parallel to a gate line connected to the thin film transistor.

In some embodiments, the liquid crystal display may further include a common electrode disposed between the microcavity and the roof layer.

In some embodiments, the thin film transistor may be connected to a data line, and a partition forming portion may be formed between the microcavities in an extension direction of the data line.

Some embodiments provide a method of manufacturing a liquid crystal display, including: forming a thin film transistor on a substrate including a display region and a non-display region, forming a pixel electrode on the thin film transistor, forming a sacrificial layer on the pixel electrode, forming a roof layer on the sacrificial layer, forming a microcavity in which a liquid crystal injection hole is formed by removing the sacrificial layer, injecting a liquid crystal material into the microcavity, applying a capping material on the display region and the non-display region so as to cover the roof layer and the liquid crystal injection hole, and forming a capping layer by patterning the capping material to remove the capping material applied on the non-display region.

In some embodiments, the capping material may include a water-soluble polymer material.

In some embodiments, the water-soluble polymer material may include at least one of polyvinyl alcohol (PVA), methoxypolyethylene glycol, polyethylene glycol, poly(ethylene glycol) diacrylate, polyethylene glycol dimethacrylate, and polyvinylpyrrolidone.

In some embodiments, the capping material may further includes a photoinitiator.

In some embodiments, the photoinitiator may include at least one of ammonium dichromate, a diazo resin, a styrylpyridium group, and a stilbazolium group.

In some embodiments, the capping material may have a positive photoresist property.

In some embodiments, the forming of the capping layer may include removing the capping material applied on the non-display region through exposure and developing processes by disposing a mask on the substrate.

In some embodiments, the microcavity may include a plurality of regions corresponding to pixel regions, a liquid crystal injection hole forming region may be formed between the plurality of regions, and the capping layer may be formed to cover the liquid crystal injection hole forming region.

In some embodiments, the liquid crystal injection hole forming region may be formed to extend in a direction that is parallel to a gate line connected to the thin film transistor.

In some embodiments, the method may further include forming a common electrode between the sacrificial layer and the roof layer.

According to the exemplary embodiments of the present disclosure, it is possible to prevent contaminating the liquid crystal by forming a capping layer including a water-soluble polymer material, and to expose a pad portion of an outskirt portion through a photoprocess by forming the capping layer allowing the photoprocess.

### BRIEF DESCRIPTION OF THE DRAWINGS

FIG. 1 is a top plan view illustrating a liquid crystal display according to an exemplary embodiment of the present disclosure.
FIG. 2 is a cross-sectional view taken along cut line II-II of FIG. 1.
FIG. 3 is a cross-sectional view taken along cut line III-III of FIG. 1.
FIG. 4 is a perspective view illustrating a microcavity according to the exemplary embodiment of the present disclosure.
FIG. 5 is a picture obtained by testing the degree of contamination by mixing a capping material according to the exemplary embodiment of the present disclosure with a liquid crystal material.
FIG. 6 is a graph illustrating a test result according to FIG. 5.
FIG. 7 is a flowchart illustrating a method of manufacturing the liquid crystal display according to an exemplary embodiment of the present disclosure.
FIGS. 8 to 11 are top plan views illustrating the method of manufacturing the liquid crystal display according to the exemplary embodiment of the present disclosure.

### DETAILED DESCRIPTION

Hereinafter, exemplary embodiments of the present disclosure will be described in detail with reference to the accompanying drawings. However, the described embodiments may be modified in various different ways, all without departing from the scope of the present invention. On the contrary, exemplary embodiments introduced herein are provided to make disclosed contents thorough and complete and sufficiently transfer the present invention to those skilled in the art.

In the drawings, the thickness of layers, films, panels, regions, etc., are exaggerated for clarity. It will be understood that when a layer is referred to as being "on" another layer or substrate, it can be directly on the other layer or substrate, or intervening them may also be present. Like reference numerals designate like elements throughout the specification.

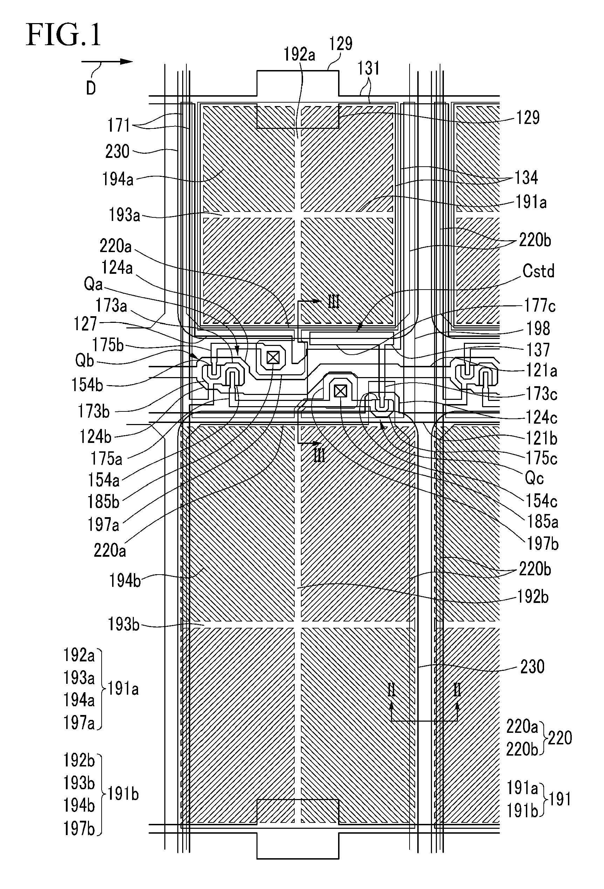

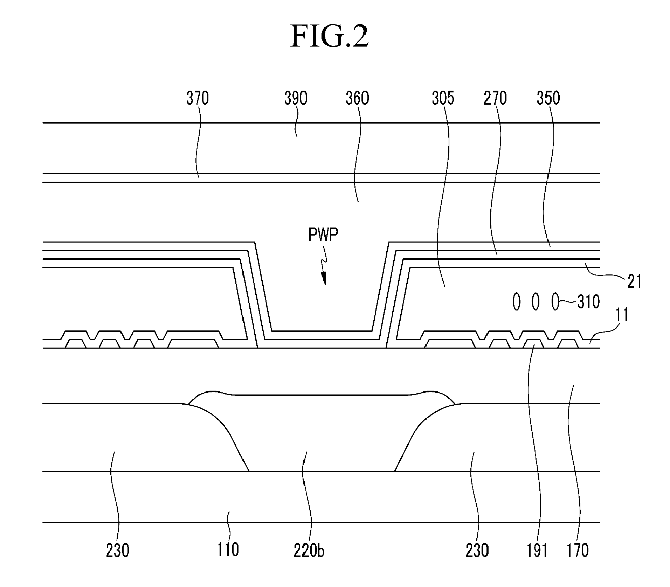

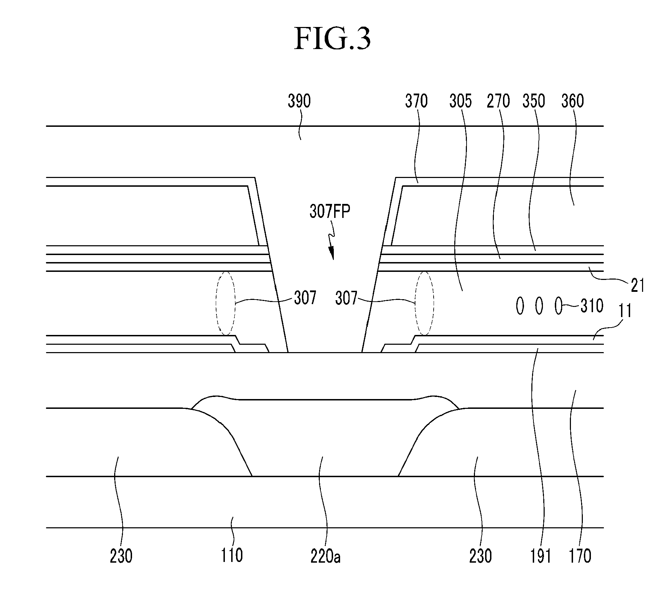

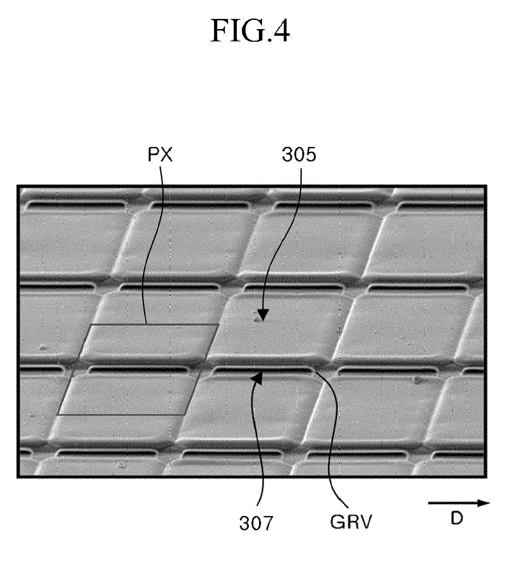

FIG. 1 is a top plan view illustrating a liquid crystal display according to an exemplary embodiment. FIG. 2 is a cross-sectional view taken along cut line II-II of FIG. 1. FIG. 3 is a cross-sectional view taken along cut line III-III of FIG. 1. FIG. 4 is a perspective view illustrating a microcavity according to the exemplary embodiment.

Referring to FIGS. 1 to 3, thin film transistors **Qa, Qb,** and **Qc** are disposed on a substrate **110** made of transparent glass or plastic.

In some embodiments, color filter **230** may be disposed on the thin film transistors **Qa, Qb,** and **Qc,** and a light blocking member **220** may be formed between the adjacent color filters **230.**

FIGS. 2 and 3 are the cross-sectional views taken along cut line **II-II** and cut line III-III, where a structure between the substrate **110** and the color filter **230** illustrated in FIG. 1 is omitted. In practice, FIGS. 2 and 3 include a portion of the structure of the thin film transistors **Qa, Qb,** and **Qc** between the substrate **110** and the color filter **230.**

The color filter **230** may longitudinally extend in a column direction of pixel electrodes **191.** The color filter **230** may display one of primary colors such as three primary colors of red, green, and blue colors. However, the color is not limited to the three primary colors of red, green and blue colors, and one of cyan, magenta, yellow, and white-based colors may be displayed.

The adjacent color filters **230** may be spaced apart from each other in a horizontal direction **D** illustrated in FIG. 1 and a vertical direction crossing the horizontal direction. The color filters **230** spaced apart from each other in the horizontal direction **D are** illustrated in FIG. 2, and the color filters **230** spaced apart from each other in the vertical direction are illustrated in FIG. 3.

Referring to FIG. 2, a vertical light blocking member **220b** is disposed between the color filters **230** spaced apart from each other in the horizontal direction **D.** The vertical light blocking member **220b** overlaps with an edge of each of the adjacent color filters **230**, and overlapping widths of the vertical light blocking member **220b** with both edges of the color filters **230** are substantially the same as each other.

Referring to FIG. 3, a horizontal light blocking member **220a** is disposed between the color filters 230 spaced apart from each other in the vertical direction. The horizontal light blocking member **220a** overlaps with an edge of each of the adjacent color filters **230**, and overlapping widths of the horizontal light blocking member **220a** with both edges of the color filters **230** are substantially the same as each other.

Alternatively, the light blocking member **220** may be disposed on a microcavity **305** as will be described later, and in this case, the color filters **230** may be continuously formed in the vertical direction, or the color filters displaying different colors may be formed while overlapping with each other at the edges.

A first passivation layer **170** is disposed on the color filter **230** and the light blocking member **220.** The first passivation layer **170** may be formed of an inorganic material or an organic material, and may serve to planarize layers formed on a lower portion.

The pixel electrode **191** is disposed on the first passivation layer **170,** and is electrically connected through contact holes **185a** and **185b** to one terminal of the thin film transistors **Qa** and **Qb.**

A lower alignment layer **11** may be formed on the pixel electrode **191,** and the lower alignment layer **11** may be a vertical alignment layer. The lower alignment layer **11** may be formed to include at least one of materials generally used as a liquid crystal alignment layer, such as polyamic acid, polysiloxane, or polyimide.

An upper alignment layer **21** may be disposed on a portion facing the lower alignment layer **11,** and the microcavity **305** is formed between the lower alignment layer **11** and the upper alignment layer **21.** A liquid crystal material including a liquid crystal molecule **310** may be injected into the microcavity **305,** and the microcavity **305** has a liquid crystal injection hole **307.** The microcavity **305** may be formed in the column direction of the pixel electrode **191,** for example, the vertical direction. In the present exemplary embodiment, the alignment material forming the alignment layers **11** and **21** and the liquid crystal material including the liquid crystal molecule **310** may be injected into the microcavity **305** by using capillary force.

In the present exemplary embodiment, one liquid crystal injection hole is formed at each of both edges of one microcavity **305**, but as another exemplary embodiment, only one liquid crystal injection hole may be formed at one edge of one microcavity **305.**

The upper alignment layer **21** is disposed on the microcavity **305**, and a common electrode **270** and a lower insulating layer **350** are disposed on the upper alignment layer **21.** The common electrode **270** receives a common voltage and forms an electric field together with the pixel electrode **191** to which a data voltage is applied to determine an inclination direction of the liquid crystal molecule **310** disposed in the microcavity **305** between the two electrodes. The common electrode **270** and the pixel electrode **191** form a capacitor to maintain the applied voltage even after the thin film transistor is turned off. The lower insulating layer **350** may be formed of silicon nitride (SiNₓ) or silicon oxide (SiO₂).

Formation of the common electrode **270** on the microcavity **305** is described in the present exemplary embodiment, but the common electrode **270** can be formed on a lower portion of the microcavity **305** to drive liquid crystal according to a coplanar electrode (CE) mode as another exemplary embodiment.

A roof layer **360** is disposed on the lower insulating layer **350.** The roof layer 360 may include silicon oxycarbide (SiOC), a photoresist, or other organic materials. In embodiments where the roof layer **360** includes silicon oxycarbide (SiOC), the roof layer may be formed by a chemical vapor deposition method, and in the case where the roof layer includes the photoresist, the roof layer may be formed by a coating method. Silicon oxycarbide (SiOC) has merits in that transmittance is high and strain does not occur because layer stress is small in the layers formed by the chemical vapor deposition method. Accordingly, in the present exemplary embodiment, if the roof layer **360** is formed of silicon oxycarbide (SiOC), a stable layer through which light passes well may be formed.

In embodiments having a liquid crystal injection hole forming region **307FP** passing through the microcavity **305**, the common electrode **270,** the lower insulating layer **350,** and the roof layer **360** is formed on the horizontal light blocking member **220a.** The liquid crystal injection hole forming region **307FP** may be covered with a capping layer **390** as will be described later.

An upper insulating layer **370** may be disposed on the roof layer **360.** The upper insulating layer **370** may come into contact with an upper surface and a lateral wall of the roof layer **360.** The upper insulating layer **370** may be formed of silicon nitride (SiNₓ) or silicon oxide (SiO₂). The capping layer **390** may be disposed on the upper insulating layer **370.** The capping layer **390** comes into contact with an upper surface and a lateral surface of the upper insulating layer **370,** and the capping layer **390** covers the liquid crystal injection hole **307** of the microcavity **305** exposed by the liquid crystal injection hole forming region **307FP.**

The capping layer **390** may be formed at a portion corresponding to a display region.

The capping layer **390** according to the present exemplary embodiment includes a water-soluble polymer material. In the present exemplary embodiment, the water-soluble polymer material may be polyvinyl alcohol represented by the following Chemical Formula 1:

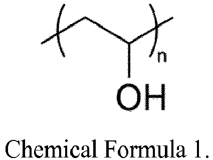

Further, the water-soluble polymer material according to the present exemplary embodiment may include at least one of methoxypolyethylene glycol, polyethylene glycol, poly(ethylene glycol) diacrylate, polyethylene glycol dimethacrylate, and polyvinylpyrrolidone.

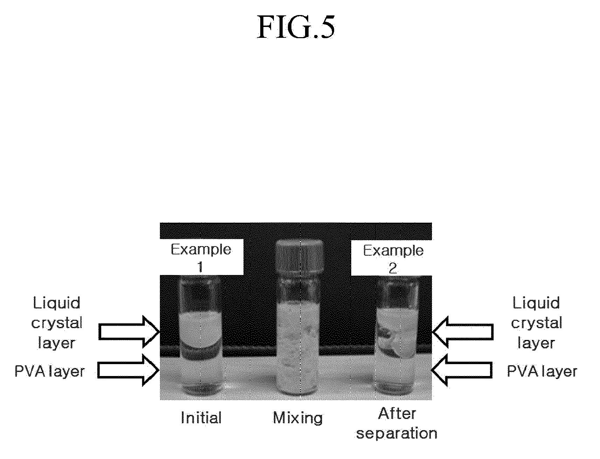

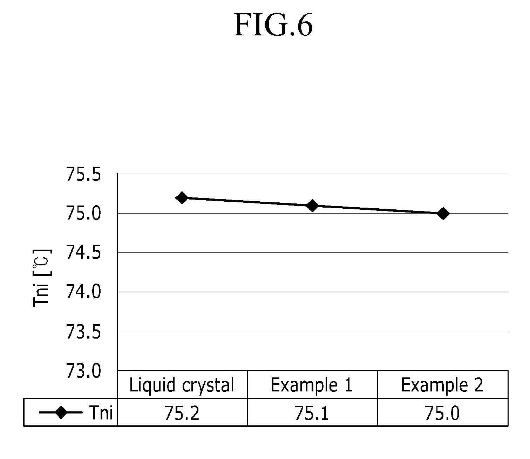

In the present exemplary embodiment, since the capping layer **390** includes the water-soluble polymer material, even though the capping layer comes into contact with the liquid crystal material that is hydrophobic, the liquid crystal material is not contaminated. A detailed description thereof will be described later with reference to FIGS. 5 and 6. Further, the capping layer **390** may further include an adherence accelerator. Herein, the adherence accelerator may be a compound represented by the following Chemical Formula 3: 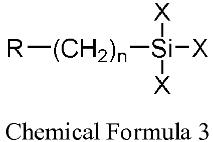 wherein, in Chemical Formula 3, **R** may include a methyl group, a vinyl group, acrylate group, methacrylate group, -NH₂ or an epoxy group, each **X** may be -OCH₃ or -OCH₂CH₃, and **n** may be 1 to 30. For example, the adherence accelerator may be (3-aminopropyl)triethoxysilane or 3-(trimethoxysilyl)propyl methacrylate.

An overcoat layer (not illustrated) formed of an inorganic layer or an organic layer may be disposed on the capping layer **390.** The overcoat layer serves to protect the liquid crystal molecule **310** injected into the microcavity **305** from an external impact and planarize the layer.

Hereinafter, the microcavity **305** will be specifically described with reference to FIGS. 1 to 4.

Referring to FIGS. 1 to 4, the microcavity **305** is divided in a vertical direction by a plurality of liquid crystal injection hole forming regions **307FP** disposed at an overlapping portion with a gate line **121a,** and is formed in plural in an extension direction **D** of the gate line 121a. The microcavities **305** formed in plural each correspond to the pixel regions, and groups of the microcavities **305** formed in plural are formed in plural in a column direction. Herein, the pixel region may correspond to a region displaying an image.

The present exemplary embodiment has thin film transistor and pixel electrode structures where two sub-pixel electrodes **191a** and **191b** are disposed with the gate line **121a** interposed therebetween. Accordingly, the first sub-pixel electrode **191a** and the second sub-pixel electrode **191b** of each of the pixels PX adjacent to each other in a vertical direction may correspond to one microcavity **305.** However, since this structure can modify the thin film transistor and pixel electrode structures, modification into a form where the microcavity **305** corresponds to one pixel PX is feasible.

In this case, the liquid crystal injection hole forming region **307FP** formed between the microcavities **305** may be disposed in an extension direction **D** of the gate line **121a,** and the liquid crystal injection hole **307** of the microcavity **305** forms a region corresponding to a boundary portion between the liquid crystal injection hole forming region **307FP** and the microcavity **305.** In some embodiments, the liquid crystal injection hole **307** is formed in the extension direction of the liquid crystal injection hole forming region **307FP.** In addition, a partition forming portion **PWP** formed between the microcavities 305 adjacent to each other in the extension direction **D** of the gate line **121a,** as illustrated in FIG. 3, may be covered with the roof layer **360.** In the present exemplary embodiment, the lower insulating layer **350,** the common electrode **270,** the upper insulating layer **370,** and the roof layer **360** are filled in the partition forming portion **PWP,** and this structure may form a partition to section or define the microcavity **305.**

In the present exemplary embodiment, it is described in that the liquid crystal injection hole forming region **307FP** is formed in the extension direction **D** of the gate line **121a**, but as another exemplary embodiment, the liquid crystal injection hole forming region **307FP** may be formed in plural in the extension direction of a data line **171,** and groups of the microcavities **305** formed in plural may be formed in plural in a row direction. In some embodiments, the liquid crystal injection hole **307** may be formed in the extension direction of the liquid crystal injection hole forming region **307FP** formed in the extension direction of the data line **171.**

In the present exemplary embodiment, since the liquid crystal material is injected through the liquid crystal injection hole **307** of the microcavity **305,** the liquid crystal display may be formed without forming a separate upper substrate.

Hereinafter, the liquid crystal display according to the present exemplary embodiment will be described in detail with reference to FIGS. 1 to 4 again.

Referring to FIGS. 1 to 4, a plurality of gate conductors including a plurality of gate lines **121a,** a plurality of voltage drop gate lines **121b,** and a plurality of storage electrode lines **131** are formed on the substrate **110** made of transparent glass or plastic.

The gate line **121a** and the voltage drop gate line **121b** mainly extend in a horizontal direction and transfer a gate signal. The gate line **121a** includes a first gate electrode **124a** and a second gate electrode **124b** that protrude upwardly and downwardly, and the voltage drop gate line **121b** includes a third gate electrode 124c that protrudes upwardly. The first gate electrode **124a** and the second gate electrode **124b** are connected to each other to form one protrusion.

The storage electrode line **131** mainly extends in a horizontal direction and transfers a predetermined voltage such as a common voltage Vcom. The storage electrode line **131** includes a storage electrode **129** that protrudes upwardly and downwardly, a pair of vertical portions **134** that substantially vertically extend downwardly in respect to the gate line **121a,** and a horizontal portion **127** through which ends of the pair of vertical portions **134** are connected to each other. The horizontal portion **127** includes a capacitive electrode **137** extending downwardly.

A gate insulating layer (not illustrated) may be formed on the gate conductors **121a**, **121b**, and **131.**

A plurality of semiconductor stripes (not illustrated) that may be made of amorphous, crystalline silicon, or the like may be formed on the gate insulating layer. The semiconductor stripe mainly extends in a vertical direction, and includes first and second semiconductors **154a** and **154b** extending toward the first and second gate electrodes **124a** and **124b** and connected to each other, and a third semiconductor **154c** disposed on the third gate electrode **124c.**

A plurality pairs of ohmic contacts (not illustrated) may be formed on the semiconductors **154a**, **154b**, and **154c.** The ohmic contacts may be made of silicide or a material such as n+ hydrogenated amorphous silicon to which an n-type impurity is doped at a high concentration.

A data conductor including a plurality of data lines **171**, a plurality of first drain electrodes **175a**, a plurality of second drain electrodes **175b**, and a plurality of third drain electrodes **175c** may be formed on the ohmic contacts.

The data line **171** transfers a data signal and mainly extends in a vertical direction to cross the gate line **121a** and the voltage drop gate line **121b.** Each data line **171** includes a first source electrode **173a** and a second source electrode **173b** extending toward the first gate electrode **124a** and the second gate electrode **124b** and connected to each other.

The first drain electrode **175a**, the second drain electrode **175b,** and the third drain electrode **175c** each include one wide end portion and the other rod-shaped end portion. The rod-shaped end portions of the first drain electrode **175a** and the second drain electrode **175b** are partially surrounded by the first source electrode **173a** and the second source electrode **173b.** The one wide end portion of the first drain electrode **175a** further extends to form a U-shaped bent third drain electrode **175c.** The wide end portion **177c** of the third source electrode **173c** overlaps with the capacitive electrode **137** to form a voltage drop capacitor Cstd and the rod-shaped end portion may be partially surrounded by the third drain electrode **175c.**

The first gate electrode **124a,** the first source electrode **173a,** and the first drain electrode **175a** form a first thin film transistor **Qa** together with the first semiconductor **154a,** the second gate electrode **124b**, the second source electrode **173b,** and the second drain electrode **175b** form a second thin film transistor **Qb** together with the second semiconductor **154b,** and the third gate electrode **124c,** the third source electrode **173c,** and the third drain electrode **175c** form a third thin film transistor **Qc** together with the third semiconductor **154c.**

The semiconductor stripe including the first semiconductor **154a,** the second semiconductor **154b,** and the third semiconductor **154c** may have a plane shape that is substantially the same as those of the data conductor **171, 173a, 173b, 173c, 175a, 175b,** and **175c** and the ohmic contacts therebeneath with the exception of channel regions between the source electrodes **173a, 173b,** and **173c** and the drain electrodes **175a, 175b,** and **175c.**

An exposed portion that is not covered by the first source electrode **173a** and the first drain electrode **175a** is present between the first source electrode **173a** and the first drain electrode **175a** in the first semiconductor **154a,** an exposed portion that is not covered by the second source electrode **173b** and the second drain electrode **175b** is present between the second source electrode **173b** and the second drain electrode **175b** in the second semiconductor **154b,** and an exposed portion that is not covered by the third source electrode **173c** and the third drain electrode **175c** is present between the third source electrode **173c** and the third drain electrode **175c** in the third semiconductor **154c.**

An insulating layer (not illustrated) that may be made of an inorganic insulator such as silicon nitride or silicon oxide is formed on the data conductor **171, 173a, 173b, 173c, 175a, 175b, and 175c** and the exposed portions of the semiconductors **154a, 154b,** and **154c.**

The color filter **230** may be disposed on the insulating layer. The color filter **230** may be disposed in most regions other than regions in which the first thin film transistor **Qa,** the second thin film transistor **Qb,** the third thin film transistor **Qc,** and the like are disposed. The color filter **230** may longitudinally extend in a vertical direction along the space between the data lines **171** that are adjacent to each other. In the present exemplary embodiment, the color filter **230** is formed at a lower end of the pixel electrode **191,** but may be formed on the common electrode **270.**

A light blocking member **220** may be disposed on the region in which the color filter **230** is not disposed and a portion of the color filter **230.** The light blocking member **220** extends along the gate line **121a** and the voltage drop gate line **121b** to expand upwardly and downwardly, and includes a horizontal light blocking member **220a** covering the region in which the first thin film transistor **Qa,** the second thin film transistor **Qb,** the third thin film transistor **Qc,** and the like are disposed, and a vertical light blocking member **220b** extending along the data line **171.**

The light blocking member **220** is called a black matrix and prevents light leakage.

A plurality of contact holes **185a** and **185b** through which the first drain electrode **175a** and the second drain electrode **175b** may be formed in the insulating layer and the light blocking member **220.**

In addition, a first passivation layer **170** may be formed on the color filter **230** and the light blocking member **220.** The pixel electrode **191** including the first sub-pixel electrode **191a** and the second sub-pixel electrode **191b** is formed on the first passivation layer **170.** The first sub-pixel electrode **191a** and the second sub-pixel electrode **191b** are separated from each other with the gate line **121a** and the voltage drop gate line **121b** interposed therebetween and are disposed thereon and therebeneath to be adjacent to each other in a column direction. The second sub-pixel electrode **191b** may be approximately 1 to 3 times larger than the first sub-pixel electrode **191a.**

The whole shape of each of the first sub-pixel electrode **191a** and the second sub-pixel electrode **191b** is a quadrangle, and the first sub-pixel electrode **191a** and the second sub-pixel electrode **191b** each include a cross-type stem portion formed of horizontal stem portions **193a** and **193b** and vertical stem portions **192a** and **192b** crossing the horizontal stem portions **193a** and **193b.** Further, the first sub-pixel electrode **191a** and the second sub-pixel electrode **191b** each include a plurality of fine branch portions **194a** and **194b,** and protrusions **197a** and **197b** that protrude downwardly or upwardly from edge sides of the sub-pixel electrodes **191a** and **191b.**

The pixel electrode **191** is divided into four sub-regions by the horizontal stem portions **193a** and **193b** and the vertical stem portions **192a** and **192b.** The fine branch portions **194a** and **194b** obliquely extend from the horizontal stem portions **193a** and **193b** and the vertical stem portions **192a** and **192b,** and the extension direction thereof may form an angle of approximately 45° or 135° with the gate lines **121a** and **121b** or the horizontal stem portions **193a** and **193b.** Further, the extension directions of the fine branch portions **194a** and **194b** of the two adjacent sub-regions may be orthogonal to each other.

In the present exemplary embodiment, the first sub-pixel electrode **191a** further includes an outskirt stem portion surrounding an outskirt thereof, and the second sub-pixel electrode **191b** further includes horizontal portions disposed at an upper end and a lower end, and left and right vertical portions **198** disposed at the left and the right of the first sub-pixel electrode **191a.** The left and right vertical portions **198** may prevent capacitive bonding, that is, coupling, between the data line **171** and the first sub-pixel electrode **191a.**

The lower alignment layer **11,** a microcavity layer **400,** the upper alignment layer **21,** the common electrode **270,** the lower insulating layer **350,** the capping layer **390,** and the like are formed on the pixel electrode **191,** and the constituent elements is described above, and thus omitted.

A description of the liquid crystal display described until now is an example of a visibility structure for improving lateral surface visibility, a structure of the thin film transistor and a pixel electrode design are not limited to the structure described in the present exemplary embodiment, but the content according to a modification of the exemplary embodiment of the present invention may be applied.

FIG. 5 is a picture obtained by testing the degree of contamination by mixing the capping material forming the capping layer according to the exemplary embodiment of the present disclosure with the liquid crystal material.

Referring to FIG. 5, polyvinyl alcohol represented by the following Chemical Formula 2: 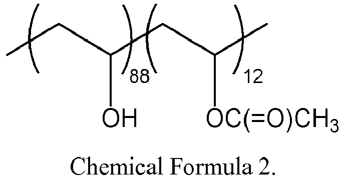 The polyvinyl alcohol was initially put into one glass test tube with the liquid crystal material. Herein, polyvinyl alcohol may be in an uncured state. The liquid crystal material may be any liquid crystal material known by one of skill in the art include.

The initial glass test tube corresponds to Example 1 in a state where the liquid crystal material and polyvinyl alcohol (PVA) are combined without mixing and then stored for 3 days at room temperature. An intermediate glass test tube represents a mixing state obtained by shaking the glass test tube in Example 1. After separation, the glass test tube corresponds to Example 2 in a state where the liquid crystal layer and polyvinyl alcohol are mixed and then stored at room temperature for 3 days in the intermediate glass test tube.

When viewed by the naked eye, in Example 1, the liquid crystal layer and the polyvinyl alcohol layer are vertically separated and there is no mixing phenomenon. In the intermediate glass test tube, when the liquid crystal layer and the polyvinyl alcohol layer were mixed, two materials seemed to be temporarily mixed. However, like in Example 2, when the intermediate glass test tube was stored at room temperature for 3 days, the liquid crystal layer and the polyvinyl alcohol layer were vertically separated from each other like an initial state.

From the aforementioned result, it could be confirmed that in the present exemplary embodiment, even though the capping layer including the water-soluble polymer material temporarily came into contact with the liquid crystal by mixing, the capping layer and the liquid crystal did not maintain contact and separated.

FIG. 6 is a graph illustrating a test result according to FIG. 5.

An initial transition temperature (nematic isotropic temperature; Tni) of the liquid crystal material is 75.2°C. In comparison, the transition temperature is 75.1°C in Example 1, and the transition temperature is 75.0°C in Example 2. Thus, a transition temperature change is 0.1°C in Example 1, and a transition temperature change is 0.2°C in Example 2. As described above, the transition temperature change is a method capable of indirectly confirming the degree of contamination of liquid crystal. Even though the liquid crystal material and polyvinyl alcohol are mixed like in Example 1, it can be confirmed that contamination is hardly present. Further, similar to Example 2, even though the liquid crystal material and polyvinyl alcohol are mixed by forcibly shaking the glass test tube, the liquid crystal material and polyvinyl alcohol seem to be temporarily mixed, but it can be confirmed that the liquid crystal material and polyvinyl alcohol are finally separated and a transition temperature change is 0.2°C, which is not large.

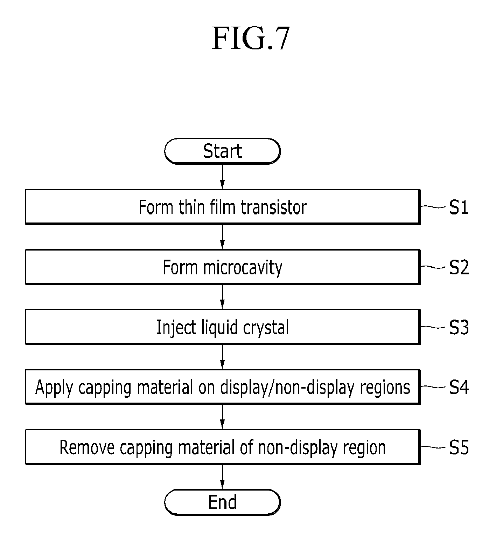

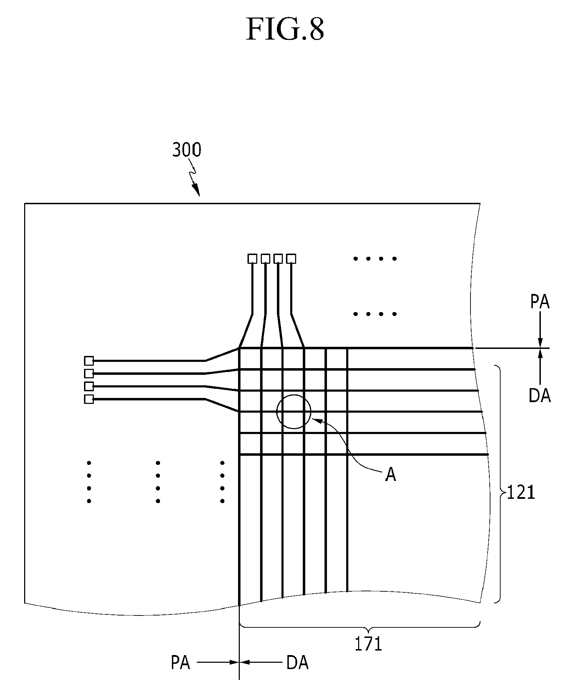

FIG. 7 is a flowchart illustrating a method of manufacturing the liquid crystal display according to an exemplary embodiment of the present disclosure. FIGS. 8 to 11 are top plan views illustrating the method of manufacturing the liquid crystal display according to the exemplary embodiment of the present invention.

Referring to FIG. 7, the method of manufacturing the liquid crystal display according to the exemplary embodiment of the present invention includes forming the thin film transistor on the substrate (**S1**).

The thin film transistor may act as a switching element in the present exemplary embodiment, and may control, input, and output a signal in order to display an image.

In the present exemplary embodiment, as illustrated in FIG. 1, the three thin film transistors **Qa, Qb,** and **Qc** are formed such that the signal is controlled, inputted, and outputted, but this thin film transistor structure can be modified.

Referring back to FIGS. 1 to 3, the organic layer **230** is formed to correspond to the pixel region on the thin film transistors **Qa, Qb,** and **Qc,** and the light blocking members **220a** and **220b** are formed between the adjacent organic layers **230.**

Thereafter, the pixel electrode **191** including a fine branch portion is formed on the organic layer **230.** The pixel electrode **191** may be made of a transparent conductor such as ITO or IZO.

A sacrificial layer is formed of a material including a photoresist and the like on the pixel electrode **191,** and the partition forming portion **PWP** is formed on the vertical light blocking member **220b** by exposing/developing or patterning the sacrificial layer. The partition forming portion **PWP** may section the microcavities **305** adjacent to each other in a horizontal direction.

Thereafter, the method includes forming the microcavity (**S2**).

The method of forming the microcavity **305** will be described with reference back to FIGS. 1 to 3. The common electrode **270** and the lower insulating layer **350** are sequentially formed on the sacrificial layer. The common electrode **270** may be formed of a transparent conductor such as ITO or IZO, and the lower insulating layer **350** may be formed of silicon nitride (SiNₓ) or silicon oxide (SiO₂). The roof layer **360** and the upper insulating layer **370** are sequentially formed on the lower insulating layer **350.** The roof layer **360** according to the present exemplary embodiment may be formed of a material that is different from the aforementioned sacrificial layer. The upper insulating layer **370** may be formed of silicon nitride (SiNₓ) or silicon oxide (SiO₂).

The liquid crystal injection hole forming region **307FP** through which the lower insulating layer **350** of a portion corresponding to the horizontal light blocking member **220a** is exposed may be formed by patterning the roof layer **360** before the upper insulating layer **370** is formed. Thereafter, the sacrificial layer is exposed by sequentially patterning the upper insulating layer **370,** the lower insulating layer **350,** and the common electrode **270** disposed at a portion corresponding to the liquid crystal injection hole forming region **307FP,** and the sacrificial layer is removed through the liquid crystal injection hole forming region **307FP** by oxygen (O₂) ashing treatment, a wet etching method, or the like. In this case, the microcavity **305** having the liquid crystal injection hole **307** is formed. The microcavity **305** is in a hollow space state because the sacrificial layer is removed.

The alignment layers **11** and **21** are formed on the pixel electrode **191** and the common electrode **270** by injecting an alignment material through the liquid crystal injection hole **307.**

Next, the liquid crystal material including the liquid crystal **310** may be injected through the liquid crystal injection hole **307** into the microcavity **305** by using an inkjet method or the like (**S3**).

Referring to FIG. 8, the liquid crystal display according to the exemplary embodiment of the present disclosure includes a liquid crystal panel assembly **300**, a gate driver (not illustrated) and a data driver (not illustrated) connected thereto, a gray voltage generator (not illustrated) connected to the data driver, a light source portion (not illustrated) irradiating light on the liquid crystal panel assembly **300,** a light source driver (not illustrated) controlling the light source portion, and a signal controller (not illustrated) controlling them.

The gate driver or the data driver may be formed on the liquid crystal panel assembly **300**, or may be formed as a separate integrated circuit chip.

The substrate **110** (illustrated in FIGS. 2 and 3) of the liquid crystal panel assembly **300** includes a display region **DA** and a non-display region **PA.** The display region **DA** is a region where an actual image is outputted, and in the non-display region **PA,** the aforementioned gate driver or data driver is formed, or a pad portion including a gate pad **121p,** a data pad **171p,** or the like, which is a portion connected to an external circuit, is disposed. The gate pad **121p** is a wide portion disposed at an end of the gate line **121,** and the data pad **171p** is a wide portion disposed at an end of the data line **171.**

A portion of the aforementioned liquid crystal display according to FIGS. 1 to 4 may indicate portion **A** in FIG. 8.

Next, if the liquid crystal material is injected, since the liquid crystal material may be exposed to the outside by the liquid crystal injection hole **A,** the method includes applying the capping material so as to cover the liquid crystal injection hole **A** (**S4**).

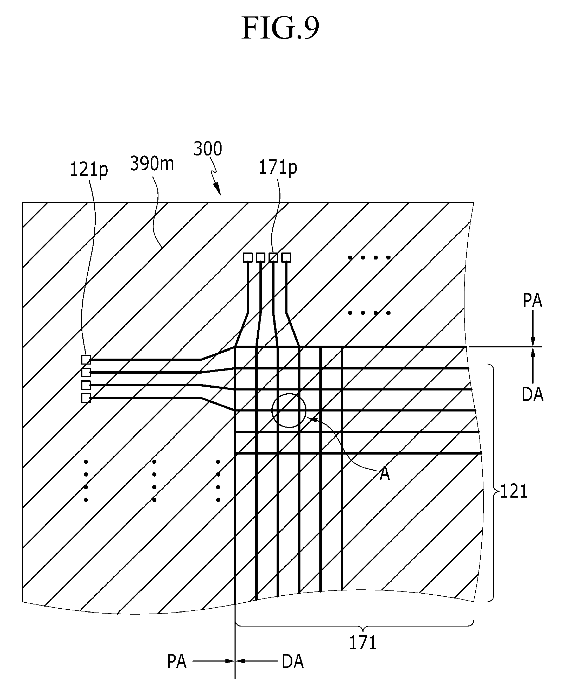

In this case, referring to FIG. 9, a capping material **390m** according to the present exemplary embodiment is applied on the non-display region **PA** as well as the display region **DA.** Since the capping material **390m** is applied on the non-display region PA, the gate pad **121p** and the data pad **171p** are covered during this step of the method.

Next, the method includes removing the capping material of the non-display region **PA** (**S5**).

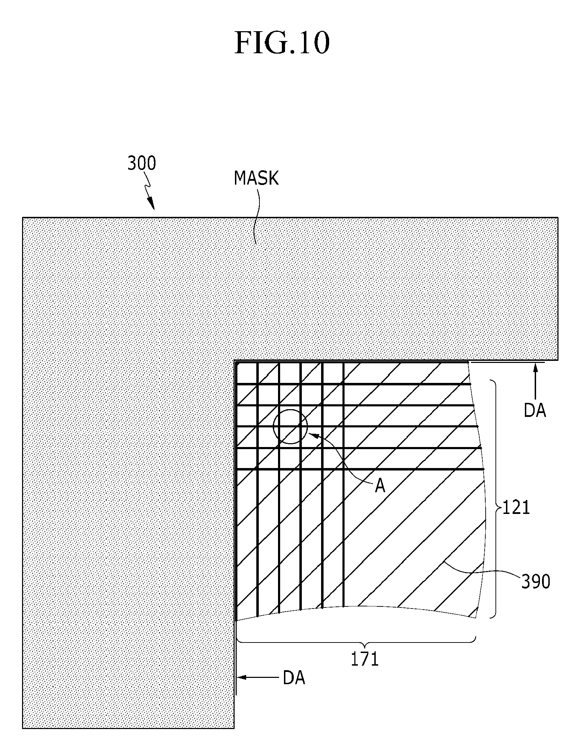

Referring to FIG. 10, an exposure process is performed while a portion corresponding to the non-display region **PA is** covered with a mask MASK so as to cover the pad portion including the gate pad **121p** and the data pad **171p.**

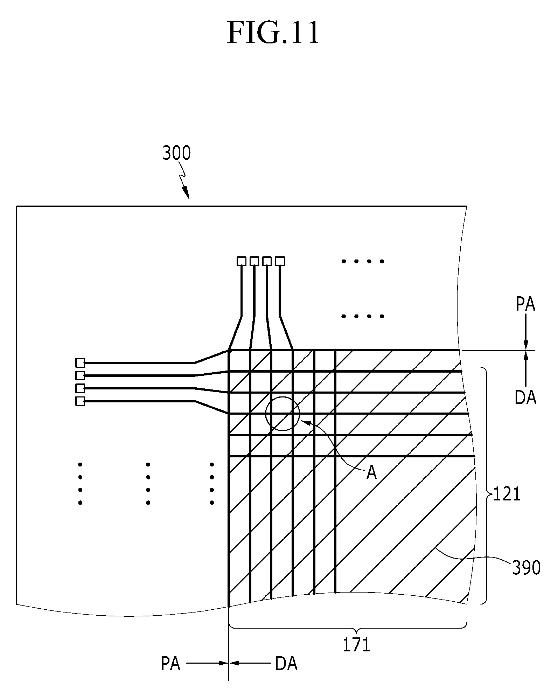

Referring to FIG. 11, the liquid crystal displays of FIGS. 2 and 3 are formed by removing the mask **MASK** and removing a capping material **390p** covering the non-display region **PA** through a developing process to form the capping layer **390.** Like this, since the capping material according to the exemplary embodiment of the present disclosure includes a photoinitiator to have a photoresist property, patterning is feasible through a photoprocess.

In the present exemplary embodiment, patterning is performed in a negative photoresist form in which a portion not receiving light is removed during exposure. Alternatively, the capping material may be formed of a material having a positive photoresist property, and in this case, patterning may be performed by using a mask that is a reverse image of the aforementioned mask **MASK.** Performing patterning after the capping material having the positive photoresist property is applied is preferable in view of the fact that a deterioration in a characteristic of the liquid crystal display by radiation of unnecessary light on the display region **DA** can be minimized.

While the embodiments have been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A liquid crystal display comprising:
a substrate;
a thin film transistor disposed on the substrate;
a pixel electrode connected to one terminal of the thin film transistor;
a roof layer disposed to face the pixel electrode; and
a capping layer disposed on the roof layer,
wherein a microcavity having a liquid crystal injection hole is disposed between the pixel electrode and the roof layer, the microcavity comprises a liquid crystal layer comprising a liquid crystal molecule, and
the capping layer covers the liquid crystal injection hole and comprises a water-soluble polymer material.

2. The liquid crystal display of claim 1, wherein:
the water-soluble polymer material comprises at least one of polyvinyl alcohol (PVA), methoxypolyethylene glycol, polyethylene glycol, poly(ethylene glycol) diacrylate, polyethylene glycol dimethacrylate, and polyvinylpyrrolidone.

3. The liquid crystal display of claim 1 or 2, wherein:
the microcavity comprises a plurality of regions corresponding to pixel regions, a liquid crystal injection hole forming region is disposed between the plurality of regions, and the capping layer covers the liquid crystal injection hole forming region.

4. The liquid crystal display of claim 3, wherein:
the liquid crystal injection hole forming region extends in a direction that is parallel to a gate line connected to the thin film transistor.

5. The liquid crystal display of one of the preceding claims, further comprising:
a common electrode disposed between the microcavity and the roof layer.

6. The liquid crystal display of one of the preceding claims, wherein:
the thin film transistor is connected to a data line, and a partition forming portion is disposed between the microcavities in an extension direction of the data line.

7. A method of manufacturing a liquid crystal display, comprising:
forming a thin film transistor on a substrate including a display region and a non-display region,
forming a pixel electrode on the thin film transistor,
forming a sacrificial layer on the pixel electrode,
forming a roof layer on the sacrificial layer,
forming a microcavity in which a liquid crystal injection hole is formed by removing the sacrificial layer,
injecting a liquid crystal material into the microcavity,
applying a capping material on the display region and the non-display region so as to cover the roof layer and the liquid crystal injection hole, and
forming a capping layer by patterning the capping material to remove the capping material applied on the non-display region.

8. The method of manufacturing a liquid crystal display of claim 7, wherein:
the capping material comprises a water-soluble polymer material, wherein:
the water-soluble polymer material preferably comprises at least one of polyvinyl alcohol (PVA), methoxypolyethylene glycol, polyethylene glycol, poly(ethylene glycol) diacrylate, polyethylene glycol dimethacrylate, and polyvinylpyrrolidone.

9. The method of manufacturing a liquid crystal display of one of the claims 7-8, wherein:
the capping material further comprises a photoinitiator, wherein:
the photoinitiator prefereably comprises at least one of ammonium dichromate, a diazo resin, a styrylpyridium group, and a stilbazolium group.

10. The method of manufacturing a liquid crystal display of one of the claims 7-9, wherein:
the capping material has a positive photoresist property, and/or wherein:
the forming of the capping layer comprises
removing the capping material applied on the non-display region through exposure and developing processes by disposing a mask on the substrate.

11. The method of manufacturing a liquid crystal display of one of the claims 7-10, wherein:
the microcavity comprises a plurality of regions corresponding to pixel regions, a liquid crystal injection hole forming region is formed between the plurality of regions, and the capping layer is formed to cover the liquid crystal injection hole forming region, wherein:
the liquid crystal injection hole forming region is preferably formed to extend in a direction that is parallel to a gate line connected to the thin film transistor.

12. The method of manufacturing a liquid crystal display of one of the claims 7-11, further comprising:
forming a common electrode between the sacrificial layer and the roof layer.

13. The method of manufacturing a liquid crystal display of claim 7, wherein:
the capping layer further comprises a photoinitiator to have a property allowing a photoprocess.

14. The method of manufacturing a liquid crystal display of claim 13, wherein:
the photoinitiator comprises at least one of ammonium dichromate, a diazo resin, a styrylpyridium group, and a stilbazolium group.

15. The method of manufacturing a liquid crystal display of claim 7, wherein:
the capping layer further comprises an adherence accelerator, wherein:
the adherence accelerator preferably comprises a compound represented by the following Chemical Formula 3: 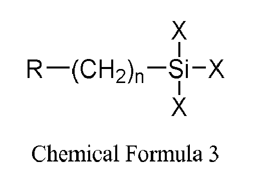 wherein, in Chemical Formula 3, **R** comprises a methyl group, a vinyl group, acrylate group, methacrylate group, NH₂ or an epoxy group, **X** is -OCH₃ or - OCH₂CH₃, and **n** is 1 to 30.
